# EUROPÄISCHE PATENTSCHRIFT

(11) **EP 3 245 323 B1**
(45) Veröffentlichungstag und Bekanntmachung des Hinweises auf die Patenterteilung: **04.03.2020**
(21) Anmeldenummer: 15804501.3
(22) Anmeldetag: 03.12.2015
(51) Int. Cl.: D05C 7/10, D05C 7/08

(54) **VERFAHREN, UM MITTELS EINER STICKMASCHINE ODER NÄHMASCHINE FLÄCHIGE MATERIALSTÜCKE VON GEWÜNSCHTER FORM AUF EINEM STICKBODEN ZU APPLIZIEREN UND EINE VORRICHTUNG FÜR EINE STICK- ODER NÄHMASCHINE, UM AUF DEM STICKBODEN FLÄCHIGE MATERIALSTÜCKE WIE FIGUREN AUS EINEM ANDEREN AUF DEM STICKGRUND APPLIZIERTEN MATERIAL AUSZUSCHNEIDEN**
METHOD IN ORDER TO APPLY FLAT MATERIAL PIECES OF DESIRED SHAPE TO AN EMBROIDERY BASE BY MEANS OF AN EMBROIDERY MACHINE OR SEWING MACHINE AND A DEVICE FOR AN EMBROIDERY OR SEWING MACHINE IN ORDER ON THE EMBROIDERY BASE TO CUT OUT FLAT MATERIAL PIECES SUCH AS FIGURES MADE FROM ANOTHER MATERIAL APPLIED TO THE EMBROIDERY BASE
PROCÉDÉ POUR APPLIQUER AU MOYEN D'UNE MACHINE À BRODER OU D'UNE MACHINE À COUDRE DES PIÈCES DE MATIÈRES EN NAPPE DE FORME SOUHAITÉE SUR UN FOND À BRODER ET DISPOSITIF POUR MACHINE À BRODER OU À COUDRE POUR DÉCOUPER DES PIÈCES DE MATIÈRE EN NAPPE TELLES DES FIGURES DANS UNE AUTRE MATIÈRE APPLIQUÉE SUR LE FOND À BRODER

(30) Priorität: 14.01.2015 CH 46152015; 17.07.2015 CH 10472015
(43) Veröffentlichungstag der Anmeldung: 22.11.2017
(73) Patentinhaber: Lässer AG, 9444 Diepoldsau (CH)
(72) Erfinder: LÄSSER, Franz, 9444 Diepoldsau (CH); GERSTER, Karl-Heinz, 6712 Thüringen (AT)
(74) Vertreter: Gachnang, Hans Rudolf
(86) Internationale Anmeldenummer: PCT/EP2015/078509
(87) Internationale Veröffentlichungsnummer: WO 2016/113038

(56) Entgegenhaltungen:
- EP-A1- 1 983 083
- DE-U1-202011 103 579
- JP-A- H0 538 590
- JP-A- H08 243 776

## Beschreibung

Gegenstand der Erfindung ist ein Verfahren, um mittels einer Stickmaschine oder Nähmaschine flächige Materialstücke von gewünschter Form auf einem Stickboden zu applizieren gemäss Oberbegriff des Patentanspruchs 1. Gegenstand der Erfindung ist weiter eine Vorrichtung für eine Stick- oder Nähmaschine, um auf dem Stickboden flächige Materialstücke aus einem auf dem Stickgrund applizierten Material auszuschneiden gemäss Oberbegriff des Patentanspruchs 7.

Unter Stickmaschinen im Sinne der Erfindung sind Grossstickmaschinen mit einer Vielzahl von bis zu tausend und mehr Nadeln verstanden, mit denen auf einem Stickgrund, der sich über die gesamte Länge der Maschine erstrecken kann, Stickmuster gestickt werden. Weiter werden als Stickmaschinen auch Kleinstickmaschinen mit horizontal angeordneten Stickboden sowie Steppmaschinen bezeichnet. Unter Nähmaschinen, auf denen gestickt werden können, sind Maschinen verstanden, die auf einem in einem Stickrahmen eingespannten Stickgrund, welcher durch eine Antriebsvorrichtung in X/Y-Richtung antreibbar ist, ebenfalls Stickmuster erzeugen. Bei allen Maschinen, d.h. der Stickmaschine und der Nähmaschine ist die Nadel in Z-Richtung antreibbar und der Stickgrund in X/Y-Richtung bezüglich der Nadeln verfahrbar.

Beim Sticken sind der Fantasie keine Grenzen gesetzt, weshalb oft nicht nur Stickereien, bestehend aus kürzeren oder längeren Stichen hergestellt werden, sondern dass zusätzlich auf den Stickgrund Materialstücke, sogenannte Applikationen aus gleichem oder einem anderen oder andersfarbigen Material, aufgestickt und danach ausgeschnitten werden.

Bis vor wenigen Jahren war es üblich, Schneiden entweder von Hand oder mit einfachen handgeführten Maschinen durchzuführen.

Es ist auch bekannt, in jüngerer Zeit zum Ausschneiden der Applikationen an den Stickmaschinen einen Laser einzusetzen. Dabei wird ein Laserstrahl, gesteuert durch die Maschinenelektronik und mit Spiegeln geführt und mit Linsen auf die Applikation fokussiert, so dass mit dem in die Applikation gelegten Brennpunkt das Ausschneiden ausgeführt werden kann. Eine solche Vorrichtung ist beispielsweise aus der DE 10 2005 050 482 von Saurer bekannt. Nachteilig an dieser Vorrichtung sind der riesige Aufwand und die geringe Schneidleistung. Der Aufwand liegt in einer entlang der Stickmaschine verfahrbaren, kastenförmigen Vorrichtung, die einen über der Stickerei abgeschlossenen Raum zum Absaugen der durch das Ausschneiden oder Ausbrennen der Applikation erzeugten Gase und anderen Schadstoffen umfasst, sowie der aufwendigen Elektronik und Optik zur Führung des Laserstrahls, dessen Brennpunkt durch die Auslenkung des Laserstrahls entlang der Stickerei laufend korrigiert werden muss. Die geringe Produktivität besteht darin, dass jeweils nur ein kleines Feld der Stickerei von maximal 50x50 cm bearbeitet werden kann und danach die Schneidvorrichtung entlang der Stickmaschine verstellt und am neuen Ort auf die dort vorhandene Stickerei justiert werden muss. Zudem verteuert sich das Schneiden mit den bekannten Lasern dadurch, dass zwischen dem Stickgrund und der Applikation eine Trennschicht eingelegt sein muss, die verhindert, dass der Stickgrund durch die Hitze im Brennpunkt des Laserstrahls beschädigt wird. Die Trennschicht muss später durch Auswaschen wieder entfernt werden.

Aus der EP1983083 sind weiter ein Verfahren und eine Vorrichtung bekannt, bei der an der Stickmaschine angeordnete Heizspitzen das Ausschneiden einer aus Kunstfasern bestehenden Applikation ermöglichen. In vorteilhafter Weise kann bei dieser Vorrichtung, im Gegensatz zur bekannten Laserschneidvorrichtung, über die gesamte Länge der Stickmaschine an verschiedenen Stellen gleichzeitig geschnitten werden. Einerseits ermöglicht es diese Vorrichtung mit einer Mehrzahl von Schneidstellen gleichzeitig zu schneiden, ohne dass eine Absaugung für entstehende Dämpfe notwendig ist. Der einzige Nachteil der Vorrichtung besteht darin, dass mit einer beheizbaren Spitze nur Applikationen aus einem schmelzbaren bzw. niedrig schmelzbaren Kunststoff-Material geschnitten werden können. Naturfasern, wie Baumwolle, Wolle oder Leder, lassen sich mit dieser Vorrichtung nicht schneiden.

Aus der JP-H08-243776 ist eine Einkopfstickmaschine bekannt, die eine Laserbearbeitungsmaschine umfasst, um eine Applikation aus einem Stoff oder einer Stoffschicht auszuschneiden. Wenn die Applikation aus einer Stoffschicht ausgeschnitten werden soll, liegt diese Stoffschicht auf einer weiteren Stoffschicht auf, die nicht geschnitten werden soll. Der Stoff oder die Stoffschichten liegen direkt auf einer Laserempfangsplatte auf. Die Laserempfangsplatte weist ein Stichloch auf, durch dessen Mittelpunkt der korrekt fokussierte Laser verläuft. Diese Anordnung ist geeignet für in einem Stickrahmen aufgespannte Stoffe oder Stoffschichten, die unmittelbar auf der Laserempfangsplatte aufliegen und durch den Niederhaltungsteil mit Federkraft der Spiralfeder auf die Laserempfangsplatte gedrückt werden. Wenn allerdings der Stoff oder die zu schneidende Stoffschicht zu grosse Abweichungen in ihrer Dicke aufweisen, erfolgt entweder ein unvollständiger Schnitt oder eine übermässige Verbrennung des Stoffs oder der Stoffschicht. Daher eignet sich diese Lösung nur für Stoffe oder Stoffschichten mit einer Dicke, die in einem sehr engen Toleranzbereich liegt.

Ein anderer Nachteil des Stichlochs gemäss der in der JP-H08-243776 gezeigten Ausführungsbeispiele besteht in der Emission von Laserlicht in den Produktionsraum, wenn das Laserlicht die Stoffbahn durchdringt. Somit erfordert die Verwendung der Lösung gemäss JP-H08-243776 aufwändige Schutzvorrichtungen zum Schutz der Mitarbeiter vor schädlichen Laserlichtemissionen, insbesondere bei Verwendung eines grobmaschigen Gewebes. Die Lösung gemäss JP-H08-243776 erfordert auch aufwändige Absaugungsvorrichtungen zur Absaugung von schädlichen Gasen, die durch den Schneidvorgang entstehen, wofür eine eigene Ansaugdüse, sowie eine durch den Rahmen verlaufende Leitung zum Ansauggebläse vorgesehen werden müssen.

Eine Aufgabe der vorliegenden Erfindung ist die Schaffung eines Verfahrens und einer Vorrichtung, mit welcher sowohl schmelzbare Applikationen als auch nichtschmelzbare Applikationen geschnitten werden können, wobei die Dicke des flächigen Materialstücks veränderlich sein kann.

Eine weitere Aufgabe der Erfindung besteht darin, dass das Schneiden nicht nur an einer einzigen Stelle, sondern an einer Vielzahl entlang der Stickmaschine angeordneten Stellen gleichzeitig ermöglicht wird.

Eine weitere Aufgabe ist die Schaffung einer Vorrichtung, mit welcher die Applikation exakt an der optimalen Stelle zum Schneidelement nicht nur in X-Y-Richtung, sondern auch in Z-Richtung positioniert und während des Schneidens in der optimalen Position zum Wirkungsbereich des Schneidorgans geführt werden kann.

Eine weitere Aufgabe der Erfindung besteht darin, die für das Schneiden notwendige, in den Schneidbereich zugeführte Energie und daraus resultierende Erwärmung von Maschinenteilen sowie beim Schneiden anfallende Verunreinigungen und Gase vor Ort wieder abzuführen.

Gelöst wird diese Aufgabe durch ein Verfahren gemäss den Merkmalen des Patentanspruchs 1 sowie durch eine Stickmaschine oder Nähmaschine gemäss Patentanspruch 7. Ein Verfahren, um mittels einer Stickmaschine oder Nähmaschine flächige Materialstücke von gewünschter Form auf einen Stickboden zu applizieren umfasst nachfolgende Schritte: mindestens eine Materialschicht wird über dem Stickboden angeordnet. Gesteuert durch ein Programm der Stickmaschine oder Nähmaschine wird eine Relativbewegung zwischen einer an der Stick- oder Nähmaschine angeordneten Schneidvorrichtung, enthaltend ein Schneidorgan und der Materialschicht erzeugt, um mit dem Schneidorgan ein Materialstück der Materialschicht auszuschneiden, wobei das Schneidorgan zusammen mit einem Gehäuse, in welches das Schneidorgan eingesetzt ist, in Richtung auf die Materialschicht und/oder die Materialschicht und der Stickboden an das Gehäuse vorgeschoben wird, bis die Vorderseite des Gehäuses die Materialschicht berührt. Die Materialschicht liegt an der Vorderseite des Gehäuses, die eine Referenzebene E bildet, geglättet an, wobei durch eine in der Vorderseite des Gehäuses ausgebildete Öffnung im Gehäuse das Schneidorgan in die Materialschicht eindringt und wobei die Materialschicht durch das Schneidorgan geschnitten wird. Während des Schneidvorgangs wird die Materialschicht durch einen im Innenraum des Gehäuses anliegenden Unterdruck an die Öffnung angesaugt.

Nach einem Ausführungsbeispiel kann die Materialschicht an einem die Öffnung ganz oder teilweise umgebenden Wulst positioniert werden. Im Bereich der Öffnung kann am Gehäuse durch Absaugen von Luft im Innenraum des Gehäuses ein gegenüber der Umgebung niedrigerer Druck aufgebaut werden, durch den die an der Öffnung anliegende Materialschicht durch die in das Gehäuse einströmende Luft an die Öffnung des Gehäuses angesaugt wird.

Nach einem Ausführungsbeispiel kann zum Schneiden der Materialschicht ein Laserstrahl als Schneidorgan durch das Gehäuse geleitet werden, dessen Brennpunkt im Bereich der Öffnung, welche eine Referenzebene E bildet, fokussiert wird, und die Materialschicht schneidet. Der Schneidvorgang kann zumindest eines der Schneidverfahren Schmelzen, Verbrennen, Verdampfen umfassen.

Die Schneidvorrichtung kann eine beheizbare Spitze umfassen, die im Gehäuse angeordnet ist, wobei die beheizbare Spitze eine Referenzebene E über der Öffnung um den Betrag der Dicke der Materialschicht durchdringt und die Materialschicht schneidet. Insbesondere kann die Materialschicht eine Kunstfaser enthalten. Erfindungsgemäß wird die Materialschicht beim Ansaugen an die Öffnung der Schneidvorrichtung vom Stickboden abgehoben, wodurch das Schneidorgan beim Schneiden der Materialschicht den Stickboden nicht berührt und nicht beschädigt.

Eine Stick- oder Nähmaschine enthält eine Schneidvorrichtung für einen Stickboden mit einer Materialschicht, wobei die Materialschicht auf dem Stickboden aufliegt, wobei die Stickmaschine oder Nähmaschine ein Steuerungsprogramm zur Steuerung der Schneidvorrichtung umfasst, sodass durch die Schneidvorrichtung flächige Materialstücke von der Materialschicht schneidbar sind. Die Schneidvorrichtung umfasst ein Schneidorgan. Die Schneidvorrichtung ist zwischen einer Ruhestellung und einer Arbeitsstellung an die Materialschicht über den Stickboden bewegbar und/oder die Materialschicht an die Schneidvorrichtung heranführbar ausgebildet. Das Schneidorgan ist in einem Gehäuse der Schneidvorrichtung angeordnet. Das Gehäuse weist eine Öffnung auf, wobei die Öffnung in der Arbeitsstellung mit der Materialschicht in Kontakt bringbar ist, derart, dass das Schneidorgan im Bereich der Öffnung in die Materialschicht eindringbar ist. Im Innenraum des Gehäuses ist ein Unterdruck erzeugbar, der dazu geeignet ist, die Materialschicht an die Öffnung anzusaugen. Die Schneidvorrichtung ist so ausgeführt, dass die Materialschicht beim Ansaugen an die Öffnung vom Stickboden abgehoben wird und das Schneidorgan ist so angeordnet, dass es beim Schneiden der Materialschicht den Stickboden nicht berührt und nicht beschädigt. Insbesondere kann Öffnung von einem Wulst ganz oder teilweise umschlossen sein.

Nach einem Ausführungsbeispiel mündet eine Absaugleitung in das Gehäuse, wobei durch die Öffnung Luft ansaugbar ist, sodass die Materialschicht, die sich in Arbeitsstellung vor der Öffnung befindet, an der Öffnung anliegt.

Nach einem Ausführungsbeispiel kann als Schneidorgan im Gehäuse eine Heizspitze angeordnet sein, mittels welcher die Materialschicht an der Öffnung durchtrennbar ist. Nach einem alternativen Ausführungsbeispiel kann als Schneidorgan im Gehäuse ein Lasermodul zur Erzeugung eines Laserstrahls angeordnet sein, in dessen Brennpunkt die Materialschicht an der Öffnung schneidbar ist.

Nach einem Ausführungsbeispiel mündet eine Blasluftleitung in das Gehäuse, um einen Luftstrom zu bilden, mit welchem Schmutzpartikel und/oder gasförmige Verunreinigungen aus dem Bereich des Schneidorgans wegführbar und mittels der Absaugleitung abführbar sind. Insbesondere kann die Absaugleitung in eine ringförmige Zone im Gehäuse münden, die innen von einem Mantel begrenzt ist, in welchem der Laserstrahl geführt oder die Heizspitze angeordnet ist. Gemäss dieses Ausführungsbeispiels können auf besonders vorteilhafte Weise Schmutzpartikel und/oder gasförmigen Verunreinigungen vom Schnittbereich abgesaugt werden, sodass sie nicht in den Maschinenraum gelangen können. Hierdurch werden die Emissionen bereits am Ort ihrer Entstehung entfernt, sodass auf weitergehenden Schutzmassnahmen für Mitarbeiter verzichtet werden kann, da die Emissionen bereits vor einem etwaigen Austritt in den Produktionsraum abgesaugt werden.

Insbesondere kann das strömungsseitig vordere Ende des Mantels in einem Abstand zur Öffnung des Gehäuses enden, derart, dass in den vom Mantel umgebenen zentralen Bereich eingeleitete Spülluft die sich mit der durch die angesaugte Materialschicht durchtretende und durch die Öffnung angesaugte Luft durch die ringförmige Zone vor der Öffnung mit der abgesaugten Luft umlenkt und mit den Schmutzpartikeln und/oder gasförmigen Verunreinigungen in die Absaugleitung gelangt. Der Mantel kann insbesondere eine Innenfläche aufweisen, die als ein Konus ausgebildet ist, wobei der Querschnitt des Konus sich in Richtung der Öffnung verjüngt, sodass ein konischer Kanal ausgebildet wird. Die Spülluft wird über eine im Mantel befindliche Öffnung unter Druck in den von der Innenfläche des Konus begrenzten Innenraum eingeleitet und dient dazu, Verunreinigungen, welche die Wirkungsweise des den Innenraum durchlaufenden Lasers beeinträchtigen können, aus diesem Innenraum zu entfernen. Der Volumenstrom der Spülluft kann insbesondere ca. 15 l/min betragen. Damit die Spülluft über die Mündungsöffnung des Mantels umgelenkt und abgesaugt werden kann, wird an der Aussenseite des Mantels ein betragsmässig höherer Unterdruck angelegt. Zwischen der Aussenseite des Mantels und dem Gehäuse kann eine Kammer oder ein Raum angeordnet sein. Damit die von der Mündungsöffnung in den Raum eintretende Spülluft aus diesem Raum abgesaugt werden kann, ohne dass sie durch die Öffnung hindurchtritt, muss in diesem Raum ein im Vergleich zum Druck der Spülluft betragsmässig höherer Unterdruck herrschen. Das heisst, der Volumenstrom der abgesaugten Luft beträgt mindestens das fünffache, vorzugsweise das sechsfache des in den Mantel eingeleiteten Volumenstroms an Spülluft. Beispielsweise kann aus dem Raum ein Volumenstrom von ungefähr 100 l/min Luft abgesaugt werden.

Insbesondere kann die Öffnung in einer sich zur Öffnung seitlich erstreckenden Führungs- oder Auflageplatte angeordnet sein, deren seitliche Kanten in einem spitzen Winkel zur Oberfläche der Führungs- oder Auflageplatte verlaufend ausgebildet sind.

Insbesondere kann als Laser ein Diodenlaser einsetzbar sein. Der Diodenlaser kann eine Wellenlänge im Bereich von 435 nm bis 455 nm aufweisen. Insbesondere kann die Wellenlänge 455 nm betragen. In dieser Wellenlänge sind derzeit die kleinsten und stärksten Laser erhältlich. Diese Diodenlaser ist besonders vorteilhaft, da es sich um einen leistungsstarken Laser insbesondere für eine Leistung von 8W handelt. Diese Leistung von 8W ist die Diodenausgangsleistung vor Umlenkung und gegebenenfalls verwendeter optischer Elemente zur Bündelung des Laserstrahls. Aus der Diode oder der Mehrzahl an Dioden wird das kollimierte, d.h. parallele Laserlicht mittels einer Sammellinse an einem definierten Referenzpunkt gebündelt.

Je nach dem eingesetzten Typ an optischen Elementen kann die Ausgangsleistung gegenüber der Nennleistung von 8W absinken.

Nach einem Ausführungsbeispiel können eine Mehrzahl von Diodenlasern optisch verschaltet werden, insbesondere können vier Diodenlaser optisch verschaltet werden.

Es gelingt, die Vorteile einer Laserschneidvorrichtung, nämlich sowohl schmelzbare Applikationen als auch nichtschmelzbare Applikationen auszuschneiden, und auch die Vorteile der in der EP1983083 beschriebenen Verfahren und Vorrichtung zum gleichzeitigen Schneiden an einer Mehrzahl von Stickstellen zu ermöglichen.

Durch die Anordnung der Schneidvorrichtung innerhalb eines in Richtung auf den Stickgrund und die darauf applizierte Materialschicht hin offenen Raums mit dem Schneidorgan, in welchem gegenüber der Umgebung ein Unterdruck erzeugt werden kann, und der an die Applikation oder die Applikation an die Schneidvorrichtung herangeführt werden kann, lässt sich die meist nur ca. 1/10-dicke Applikationsschicht an die Öffnung des Raums, die als Referenzfläche fungiert, anlegen und, sobald ein Unterdruck in diesem Raum aufgebaut wird, auch an diese ansaugen und so einerseits zu glätten und andererseits relativ zur Schneidvorrichtung exakt zu positionieren. Gleichzeitig werden durch ein Vakuum im Raum bei Verwendung eines Lasers als Schneidorgan anfallende Dämpfe und/oder Schneidpartikel vor Ort abgesaugt. Zusätzlich wird die beim Schneiden erzeugte Wärme des Schneidelements direkt aus dem Bereich des Stoffes, d. h. des Stickbodens und der Applikation abgeführt. Eine Übertragung der Wärme an andere Maschinenelemente der Stickmaschine wird verringert. Auf diese Weise ist das Schneiden im Dauerbetrieb besser geeignet. Im Weiteren kann durch die exakte Positionierung der Materialschicht, d.h. die Applikation in Relation zum Brennpunkt eines Laserstrahls oder einer Heizspitze, zehntelmillimetergenau erreicht werden, wodurch einerseits mit einer sehr geringen Leistung gearbeitet werden kann und andererseits eine minimale Menge von schädlichen Gasen erzeugt wird. Ein weiterer sehr wesentlicher Vorteil besteht darin, dass durch Ansaugen der Applikation an die Öffnung des Raums die Applikation leicht von der Oberfläche des Stickgrundes abgehoben wird und dadurch die für das Schneiden notwendige Energie, die in die Applikation eingebracht werden muss, nicht auch unmittelbar auf dem Stickgrund anfällt und diesen allenfalls verfärben, aber nicht beschädigen kann. Dies insbesondere, wenn Applikationen mit einem Laser geschnitten werden, die nicht schmelzen, sondern die zum Schneiden versengt, verbrannt oder verdampft werden müssen. Durch das Abheben der Applikation vom Stickgrund kann auf das Einlegen einer später aufwändig wieder auszuwaschenden Trennschicht verzichtet werden.

Dioden-Laser sind sehr klein und lassen sich daher in geringen seitlichen Abständen entlang der Stickmaschine positionieren und können so gleichzeitig eine Vielzahl von über die gesamte Länge der Stickmaschine verteilte Figuren ausschneiden.

Mit einer erweiterten Auflagefläche in der Ebene des Brennpunkts des Laserstrahls kann bewirkt werden, dass das Ausschneiden von Applikationen mühelos auch bei bestickten Werkstücken möglich ist, wenn auf diesen Soutache-Stickerei oder andere die Oberfläche überragende Stickereien vorhanden sind. Das Einhaken oder zur Seite schieben von Stickereielementen wird durch die vergrösserte Auflageplatte verhindert.

Einerseits werden Kosten durch Verminderung von Arbeitsschritten gegenüber dem bekannten Laserschneiden und anderseits eine Belastung des bestickten Stoffes und der Stickerei durch Auswaschmittel vermieden, da auf die Auswaschmittel verzichtet werden kann. Im Weiteren kann ein Verzug des Stickbodens und der Applikation, wie dieser beim Laser-Schneiden an einer einzigen Stelle auftritt, vermieden werden. Andererseits entfallen auch die Kosten für die Trennschicht und das vorherige Einbringen der Trennschicht zwischen dem Stickboden und der Applikation. Das erfindungsgemässe Verfahren und Vorrichtungen vereinen die Vorteile des Schneidens mit einem Laser mit den Vorteilen des Schneidens mit einer Heizspitze. Es können nun sowohl schmelzbare als auch nicht schmelzbare Applikationen geschnitten werden. Es können eine Vielzahl von Schneidvorrichtungen nebeneinander auf der Stickmaschine angeordnet und betrieben werden.

Gegenüber den herkömmlichen Laserschneidvorrichtungen ist der Aufwand zur Vermeidung von Verletzungen der Augen des Betriebspersonals durch die Kapselung des Laserstrahls in einem Raum, dessen Öffnung direkt auf der Applikation anliegt, gewährleistet. Im Weiteren ist die Absaugung von Gasen und Verunreinigungen, die beim Schneiden von Kunststoffmaterialien oder natürlichen Materialien zwangsläufig anfallen, mit weitaus geringeren Durchsatzmengen möglich, da die Absaugung unmittelbar an der Entstehungsstelle der Verunreinigungen erfolgt. Die Verunreinigungen können also zum Vornherein nicht in die Umgebung der Maschine entweichen.

Die Dimension der einzelnen Schneidvorrichtungen ist derart kompakt, dass in Abständen von etwas mehr als 100 Millimetern Schneidvorrichtungen auf der Stickmaschine nebeneinander angeordnet werden können. Diese Abstände liegen also meistens im Bereich der kleinen bzw. engen Rapporte der Stickerei. Dies ermöglicht das gleichzeitige Ausschneiden vieler kleiner oder grosser Figuren, die eng nebeneinander gestickt worden sind.

Anhand zweier Ausführungsbeispiele wird die Erfindung näher erläutert.

Es zeigen:
- Figur 1: ein Layout einer Stickmaschine,
- Figur 2: eine perspektivische Darstellung einer Schneidvorrichtung auf einer Stickmaschine,
- Figur 3: ein Vertikalschnitt durch die Stickmaschine auf Höhe einer Schneidvorrichtung,
- Figur 4: einen vergrössert dargestellten Vertikalschnitt durch die Schneidvorrichtung,
- Figur 5: eine Aufsicht auf die Schneidvorrichtung,
- Figur 6: einen Vertikalschnitt durch eine weitere Ausgestaltung der Schneidvorrichtung und
- Figur 7: eine Aufsicht auf die Schneidvorrichtung gemäss Figur 6.

Bezugszeichen 1 bezeichnet eine Stickmaschine, insbesondere eine Grossstickmaschine mit einer Vielzahl von bis zu 1100 an Nadelträgern 4 gehaltenen Nadeln 3, welche vor Stichlöchern 5 in einer Stichlochplatte 7 positioniert sind. Oberhalb der Nadeln 3 sind im Wesentlichen kubische Verschalungen 21 angeordnet, welche schematisch die Schneidvorrichtungen 9 darstellen. Zu den Schneidvorrichtungen 9 führen unter anderem eine Druckluftleitung 11 für Spülluft und den Antrieb, Energieleitungen 13 für ein Schneidorgan 15, im dargestellten Beispiel einem Diodenlaser 27, sowie eine Absaugleitung 17, welche ebenfalls mit der Schneidvorrichtung 9 verbunden ist. Die Schneidvorrichtung 9 ist mit der Stickmaschine 1 bzw. längs der Stickmaschine 1 verlaufenden Trägern (Träger nicht dargestellt) verbindbar ausgebildet.

Die Absaugleitungen 17 zu den Schneidvorrichtungen 9 sind mit einer längs der Stickmaschine 1 verlaufenden zentralen Absaugung 19 verbunden. Mit einem im Einzelnen nicht dargestellten Antrieb, z.B. Pneumatikantrieb, kann ein Gehäuse 39 in der Schneidvorrichtung 9, oder können mindestens Teile davon, in Richtung auf die Stichlochplatte 7 hin und von dieser weggeführt werden. Die Versorgung mit Druckluft durch die Druckluftleitung 11 sowie mit Saugluft für die zentrale Absaugleitung 19, die Energieleitungen sowie nicht weiter dargestellte Steuerleitungen erfolgen vorzugsweise zentral an der Stickmaschine 1.

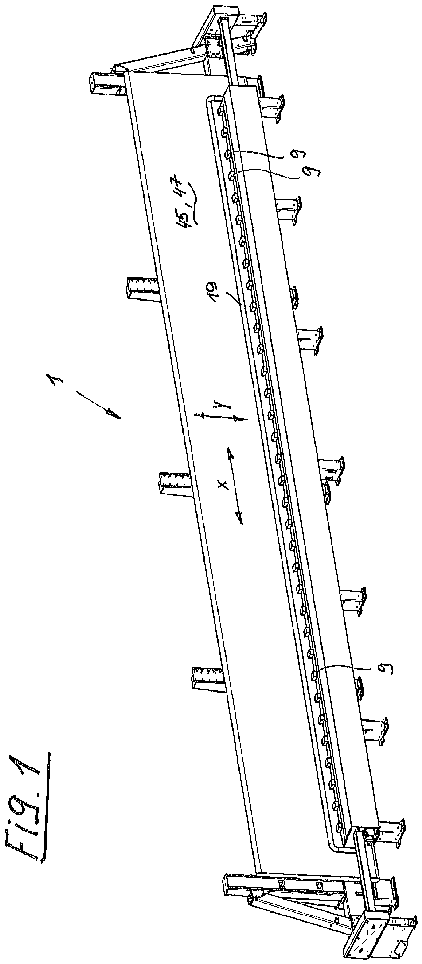

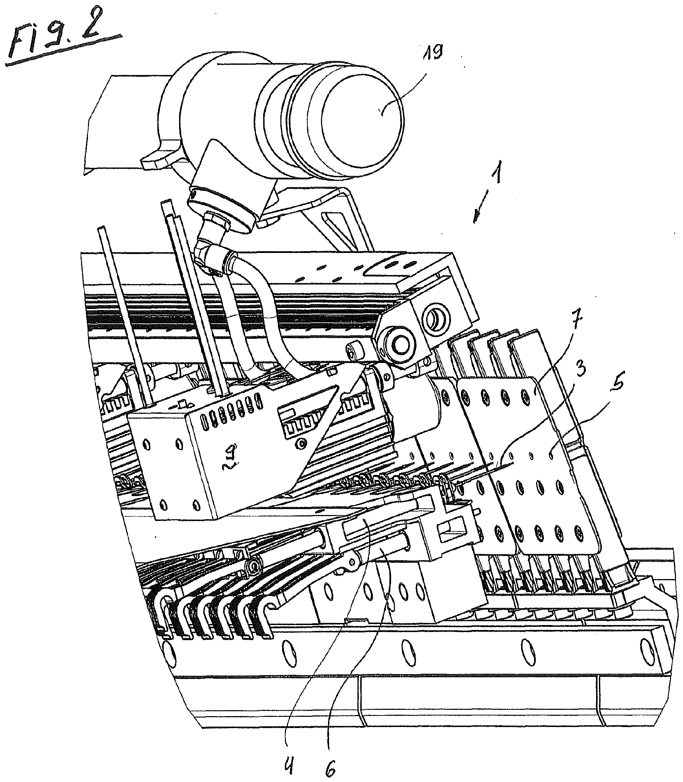

Wie aus insbesondere den Figuren 1 und 2 ersichtlich, können die Schneidvorrichtungen 9 Seite an Seite über jeweils vier oder fünf Nadeln 3 oder Bohrern bzw. Bohrerhaltern 6 angeordnet werden. Mit anderen Worten: Es können folglich mit jeder Schneidvorrichtung 9 auch eine Vielzahl von kleinsten Arbeitsbereichen, die nahe beieinander liegen, bearbeitet bzw. ausgeschnitten werden, ohne dass dazu wie beim Stand der Lasertechnik eine Neujustierung der Schneidvorrichtung 1 notwendig wird.

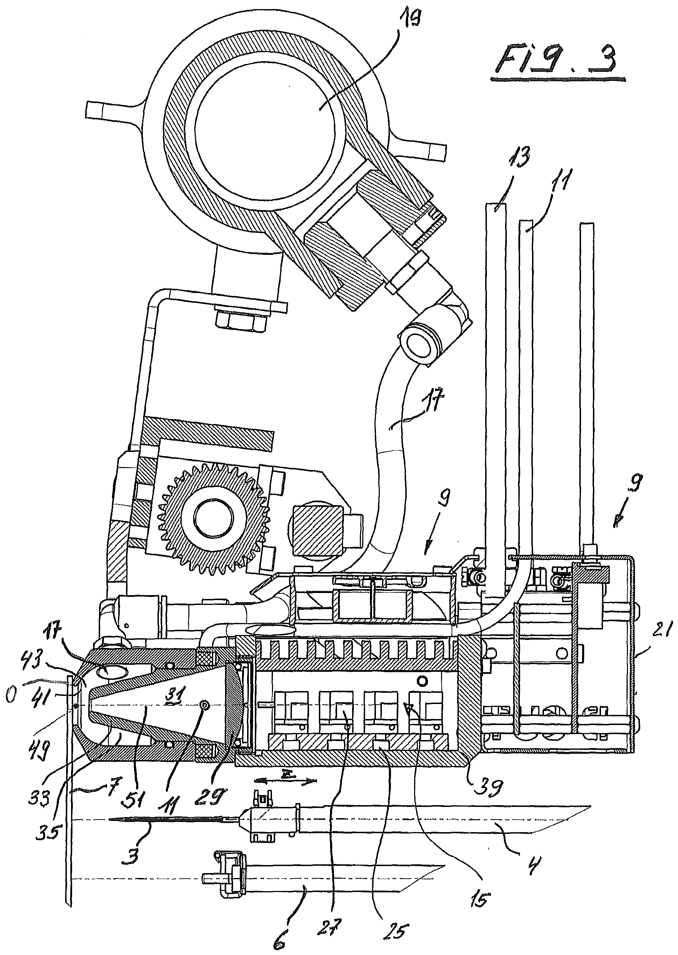

Nachfolgend wird anhand der Figuren 3 bis 5 der ersten Ausgestaltung der Aufbau einer Schneidvorrichtung 1 näher erläutert.

Jede Schneidvorrichtung 9 umfasst eine kastenförmige Verschalung 21, z.B. aus Metall, die mit der Stickmaschine 1 verbindbar ausgebildet ist (Verbindung mit Stickmaschine 1 nicht dargestellt). In der Verschalung 21 ist auf zwei Führungssäulen 23, welche eine Verbindung zur Stickmaschine darstellen, ein Gehäuse 39 und darin ein Lasermodul 25 mit beispielsweise vier Diodenlasern 27 motorisch oder pneumatisch in Z-Richtung längs verschiebbar geführt. Die Antriebsorgane für die Verschiebung sind nicht dargestellt. Vorzugsweise, jedoch nicht ausschliesslich, handelt es sich beim Laser um Diodenlaser 27 mit 435nm bis einschliesslich 455nm Wellenlänge, die optisch verschaltet sind. Auf der linken Seite der Diodenlaser 27 ist in Figur 3 eine geeignete optische Linse 29 als Fokussierungslinse eingesetzt. Die Linse 29 fokussiert die Laserstrahlen 51 des Diodenlasers 27 in einem Brennpunkt 49. An die optische Linse 29 schliesst ein beispielsweise konischer Kanal 31 an, in welchen die Druckluftleitung 11 mündet und Spülluft in den konischen Kanal 31 einführt, um eine Verunreinigung u.a. der Linse 29 zu verhindern. Mittels dieser Linse 29 lässt sich der Brennpunkt 49 in Z-Richtung genau einstellen. Der vordere Teil des Mantels 33 des konischen Kanals 31 liegt innerhalb eines Raums 35 des Gehäuses 39. In diesen Raum 35 münden eine oder mehrere Absaugleitungen 17. Das linksseitige Ende des Raums 35 wird durch eine Öffnung 41 im Gehäuse 39 als Mündung gebildet. Das vordere Ende des im Raum 35 angeordneten konischen Kanals 31 liegt vorzugsweise axial beabstandet zur Öffnung 41, d.h. zu einer Referenzebene E, welche über der Öffnung 41 liegt.

Durch die beschriebene beabstandete Lage des Kanals 31 entsteht eine ringförmige Zone 43 zwischen dem Ende des konischen Kanals 31 und der Öffnung 41.

Über diese ringförmige Zone 43 kann die durch die Druckluftleitung 11 in den konischen Kanal 31 eingeblasene Luft in den durch die Absaugleitung 17 abgesaugte Luft etwas unter Unterdruck stehenden Raum 35 abfliessen. An der Mündung bzw. Öffnung 41 des Gehäuses 39 wird folglich durch den Unterdruck im Raum 35 Luft eingesaugt.

In einer vorteilhaften Ausführung wird im Vergleich zur in den konischen Kanal 31 eingeblasener Luft ein Vielfaches, z.B. ein Sechsfaches an Luft aus dem Raum 35 abgesaugt, wie zugeführt. Die durch den Unterdruck im Raum 35 erzeugte Luftströmung in das Gehäuse 39 zieht an der Öffnung 41 beim Heranfahren des Gehäuses 39 an einen am Gatter der Stickmaschine 1 aufgespannten Stickboden 45 mit einer darauf durch eine Stickerei applizierte Materialschicht 47, letztere an die Öffnung 41 am Gehäuse 39 an. Dadurch hebt die Materialschicht 47 im Bereich der Öffnung 41 etwas vom Stickboden 45 ab. Dieses Abheben ergibt einen mit Luft gefüllten Zwischenraum 48 zwischen der Materialschicht 47 und dem darunterliegenden Stickboden 45. Dieser Zwischenraum 48 bewirkt, dass der Brennpunkt 49 eines Laserstrahls 51, der in der Materialschicht 47 zu liegen kommt, wohl die Materialschicht 47 zu trennen vermag, und den darunter liegenden Stickboden 45 nicht beschädigt.

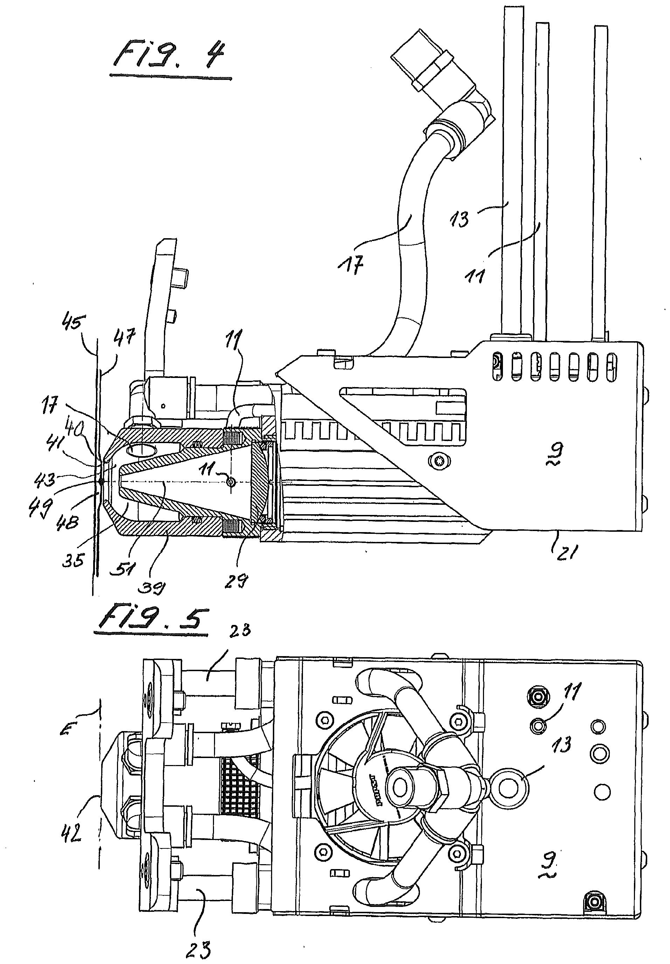

Die zu schneidende Materialschicht 47 wird durch die vom Gatter der Stickmaschine 1 ausgeführten x-y-Bewegungen des Stickbodens 45 und der darauf liegenden Materialschicht 47 an der Öffnung 41 vorbeigeführt. Dabei wird die Materialschicht 47 stets nur gerade im Bereich des Brennpunkts 49 des Laserstrahls 51 bei der Öffnung 41 vom Stickboden 45 abgehoben. Die Aussenkante 42 der Öffnung 41 oder ein die Öffnung 41 umgebender Wulst (nicht dargestellt) bildet die Referenzebene E (siehe Figur 5), in welcher der Brennpunkt 49 des Laserstrahls 51 liegt. Folglich liegt die Materialschicht 47 im Bereich des Brennpunkts 49, der mit der Linse 29 exakt auf die leicht an der Öffnung 41 plangespannt gehaltene Materialschicht 47 einstellbar ist.

Das Ansaugen von Luft aus der Atmosphäre durch den Stickboden 45 und durch die Materialschicht 47 hindurch bewirkt zusätzlich eine Kühlung des Stickboden 45 und es werden alle durch den Verbrennungs- oder Versengungsvorgang des Laserstrahls 51 verursachten Gase und Partikel dort abgesaugt. Eine Verunreinigung der Stickerei und der umgebenden Luft bzw. Teile der Stickmaschine 1 können dadurch optimal verhindert werden.

Im Weiteren werden der Laserstrahl 51 bzw. dessen für das menschliche Auge schädlichen Strahlen von der Umgebung optimal abgeschirmt, da das Gehäuse 39 mit seiner Öffnung 41 sehr nahe an der Stichlochplatte 7 zu liegen kommt und dadurch so gut wie keine schädlichen Strahlen durch den Stickgrund 45 nach aussen austreten können.

Es ist ersichtlich, dass das Schneiden der Materialschicht 47 sowohl ohne Ansaugen an die Öffnung 41, als auch mit Ansaugen geschnitten werden kann. Das Ansaugen erhöht die Sicherheit, dass die Materialschicht 47 plan an der Öffnung 41 und damit in der Referenzebene liegt, in der sich Brennpunkt 49 befindet.

Alternativ zu den den Laserstrahl 51 erzeugenden Dioden als Schneidorgan 15 kann im konischen Kanal 31 eine Heizspitze eingesetzt sein, deren Spitzenende die Öffnung 41 höchstens um die Dicke der zu schneidenden Materialschicht 47 überragt. Die Heizspitze trennt dadurch die Materialschicht 47 ohne den darunter liegenden, in einem Abstand zur Materialschicht 47 angeordneten Stickboden 45 zu berühren und damit zu beschädigen (Schneidspitze nicht dargestellt).

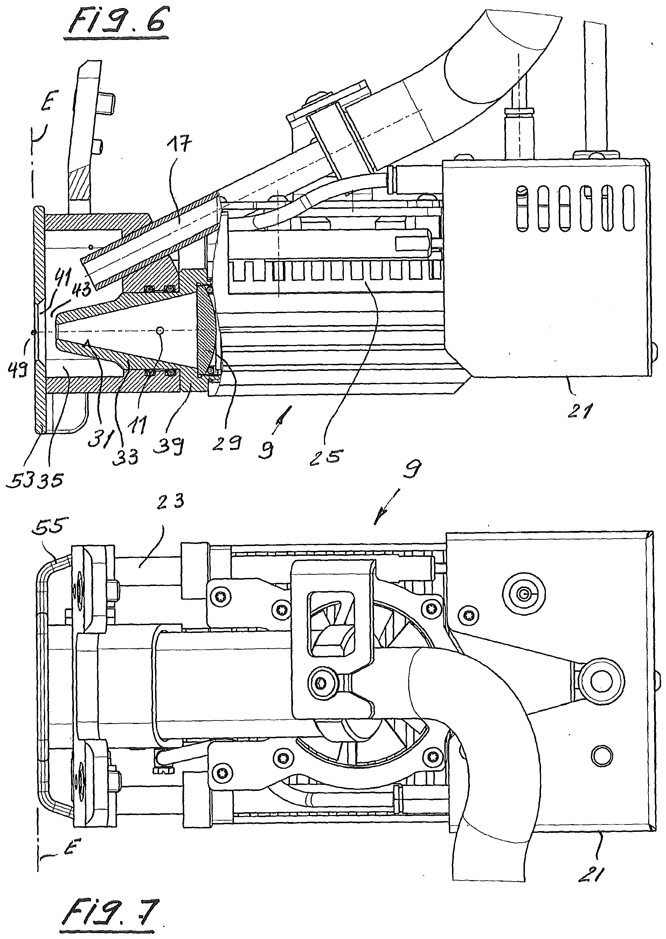

In der zweiten Ausgestaltung der Erfindung gemäss den Figuren 6 und 7 verläuft das vordere Ende des Gehäuses 39 nicht kegelstumpfförmig auf die Öffnung 41 hin, sondern die Öffnung 41 kommt in einer planen Führungs- oder Auflageplatte 53 zu liegen. Der durch die Führungs- oder Auflageplatte 53 wesentlich vergrösserte Auflagebereich der Schneidvorrichtung 9 auf der Materialschicht 47 bewirkt, wie bereits erwähnt, dass auch sehr unebene Flächen auf dem Stickboden 45 aufgebracht ist, geführt werden können.

Bevorzugt sind die Randbereiche oder Kanten 55 der Führungs- oder Auflageplatte 53 in einem spitzen Winkel zur Oberfläche der Führungs- oder Auflageplatte 53 verlaufend angeordnet.

Eine miniaturisierte Ausführung der Schneidvorrichtung 9 liesse sich auch direkt an einem Bohrerträger 6 oder dem Nadelträger 4 (beide in Figur 3 schematisch dargestellt) anbringen und mit diesem an die Materialschicht 45 vor und von dieser zurück in eine Ruhestellung führen.

### Legende der Bezugszeichen

- 1: Stickmaschine
- 3: Nadeln
- 4: Nadelträger
- 5: Stichloch
- 6: Bohrerhalter
- 7: Stichlochplatte
- 9: Schneidvorrichtung
- 11: Druckluftleitung
- 13: Energieleitung
- 15: Schneidorgan
- 17: Absaugleitung
- 19: zentrale Absaugleitung
- 21: Verschalung
- 23: Führungssäule
- 25: Lasermodul
- 27: Diodenlaser
- 29: optische Linse
- 31: konischer Kanal
- 33: Mantel von 31
- 35: Raum
- 39: Gehäuse
- 40: Wulst
- 41: Öffnung von 37
- 42: Aussenkante
- 43: Zone
- 45: Stickboden
- 47: Materialschicht
- 48: Zwischenraum
- 49: Brennpunkt
- 51: Laserstrahl
- 53: Führungs- und Auflageplatte
- 55: Kanten an 53

## Patentansprüche

1. Verfahren, um mittels einer Stickmaschine oder Nähmaschine (1) flächige Materialstücke von gewünschter Form auf einen Stickboden (45) zu applizieren, wobei mindestens eine Materialschicht (47) über dem Stickboden (45) angeordnet wird, wobei, gesteuert durch ein Programm der Stickmaschine oder Nähmaschine (1) eine Relativbewegung zwischen einer an der Stick- oder Nähmaschine (1) angeordneten Schneidvorrichtung (9), enthaltend ein Schneidorgan (15), und der Materialschicht (47) erzeugt wird, um mit dem Schneidorgan (15) ein Materialstück der Materialschicht (47) auszuschneiden,
- wobei das Schneidorgan (15) zusammen mit einem Gehäuse (39), in welches das Schneidorgan (15) eingesetzt ist, in Richtung auf die Materialschicht (47) und/oder die Materialschicht (47) und der Stickboden (45) an das Gehäuse (39) vorgeschoben wird, bis die Vorderseite des Gehäuses (39) die Materialschicht (47) berührt,
- wobei die Materialschicht (47) an der Vorderseite des Gehäuses (39), die eine Referenzebene E bildet, geglättet anliegt,
- wobei durch eine in der Vorderseite des Gehäuses (39) ausgebildete Öffnung (41) im Gehäuse (39) das Schneidorgan (15) in die Materialschicht (47) eindringt und
- wobei die Materialschicht (47) durch das Schneidorgan (15) geschnitten wird, wobei während des Schneidvorgangs die Materialschicht (47) durch einen im Innenraum des Gehäuses (39) anliegenden Unterdruck an die Öffnung (41) angesaugt wird, **dadurch gekennzeichnet, dass** die Materialschicht (47) beim Ansaugen an die Öffnung (41) vom Stickboden (45) abgehoben wird und das Schneidorgan (15) beim Schneiden der Materialschicht (47) den Stickboden (45) nicht berührt und nicht beschädigt.

2. Verfahren nach Anspruch 1, **dadurch gekennzeichnet, dass** die Materialschicht (47) an einem die Öffnung (41) ganz oder teilweise umgebenden Wulst (40) positioniert wird.

3. Verfahren nach einem der Ansprüche 1 oder 2, **dadurch gekennzeichnet, dass** im Bereich der Öffnung (41) am Gehäuse (39) durch Absaugen von Luft im Innenraum des Gehäuses (39) ein gegenüber der Umgebung niedrigerer Druck aufgebaut wird, durch den die an der Öffnung (41) anliegende Materialschicht (47) durch die in das Gehäuse (39) einströmende Luft an die Öffnung (41) des Gehäuses (39) angesaugt wird.

4. Verfahren nach einem der Ansprüche 1 bis 3, **dadurch gekennzeichnet, dass** zum Schneiden der Materialschicht (47) ein Laserstrahl (51) als Schneidorgan (15) durch das Gehäuse (39) geleitet wird, dessen Brennpunkt im Bereich der Öffnung (41), welche eine Referenzebene E bildet, fokussiert wird, und die Materialschicht (47) schneidet, wobei der Schneidvorgang zumindest eines der Schneidverfahren Schmelzen, Verbrennen, Verdampfen umfassen kann.

5. Verfahren nach einem der Ansprüche 1 bis 3, **dadurch gekennzeichnet, dass** die Schneidvorrichtung (9) eine beheizbare Spitze umfasst, die im Gehäuse (39) angeordnet ist, wobei die beheizbare Spitze eine Referenzebene E über der Öffnung (41) um den Betrag der Dicke der Materialschicht (47) durchdringt und die Materialschicht (47) schneidet.

6. Verfahren nach Anspruch 5, **dadurch gekennzeichnet, dass** die Materialschicht (47) eine Kunstfaser enthält und/ oder dass die Materialschicht (47) schmelzbar oder nicht schmelzbar ist.

7. Stick- oder Nähmaschine (1), enthaltend eine Schneidvorrichtung (9) für einen Stickboden (45) mit einer Materialschicht (47), wobei die Materialschicht (47) auf dem Stickboden (45) aufliegt, wobei die Stickmaschine oder Nähmaschine (1) ein Steuerungsprogramm zur Steuerung der Schneidvorrichtung (9) umfasst, sodass durch die Schneidvorrichtung (9) flächige Materialstücke von der Materialschicht (47) schneidbar sind, wobei die Schneidvorrichtung (9) ein Schneidorgan (15) umfasst, wobei die Schneidvorrichtung (9) zwischen einer Ruhestellung und einer Arbeitsstellung an die Materialschicht (47) über den Stickboden (45) bewegbar ist und/oder die Materialschicht (47) an die Schneidvorrichtung (9) heranführbar ausgebildet ist, wobei das Schneidorgan (15) in einem Gehäuse (39) der Schneidvorrichtung (9) angeordnet ist und das Gehäuse (39) eine Öffnung (41) aufweist, wobei die Öffnung (41) in der Arbeitsstellung mit der Materialschicht (47) in Kontakt bringbar ist, derart, dass das Schneidorgan (15) im Bereich der Öffnung (41) in die Materialschicht (47) eindringbar ist, wobei im Innenraum des Gehäuses (39) ein Unterdruck erzeugbar ist, der dazu geeignet ist, die Materialschicht (47) an die Öffnung (41) anzusaugen, **dadurch gekennzeichnet, dass** die Schneidvorrichtung (9) so ausgeführt ist, dass die Materialschicht (47) beim Ansaugen an die Öffnung (41) vom Stickboden (45) abgehoben wird und das Schneidorgan (15) so angeordnet ist, dass es beim Schneiden der Materialschicht (47) den Stickboden (45) nicht berührt und nicht beschädigt.

8. Stick- oder Nähmaschine (1) nach Anspruch 7, **dadurch gekennzeichnet, dass** die Öffnung (41) von einem Wulst (40) ganz oder teilweise umschlossen ist.

9. Stick- oder Nähmaschine (1) nach einem der Ansprüche 7 oder 8, **dadurch gekennzeichnet, dass** in das Gehäuse (39) eine Absaugleitung (17) mündet, wobei durch die Öffnung (41) Luft ansaugbar ist, sodass die Materialschicht (47), die sich in Arbeitsstellung vor der Öffnung (41) befindet, an der Öffnung (41) anliegt.

10. Stick- oder Nähmaschine (1) nach einem der Ansprüche 7 bis 9, **dadurch gekennzeichnet, dass** als Schneidorgan (15) im Gehäuse (39) eine Heizspitze angeordnet ist, mittels welcher die Materialschicht (47) an der Öffnung (41) durchtrennbar ist, oder als Schneidorgan (15) im Gehäuse (39) ein Lasermodul (25) zur Erzeugung eines Laserstrahls (51) angeordnet ist, in dessen Brennpunkt (49) die Materialschicht (47) an der Öffnung (41) schneidbar ist.

11. Stick- oder Nähmaschine (1) nach einem der Ansprüche 9 oder 10, **dadurch gekennzeichnet, dass** in das Gehäuse (39) eine Blasluftleitung (11) mündet, um einen Luftstrom zu bilden, mit welchem Schmutzpartikel und/oder gasförmige Verunreinigungen aus dem Bereich des Schneidorgans (15) wegführbar und mittels der Absaugleitung (17) abführbar sind.

12. Stick- oder Nähmaschine (1) nach Anspruch 11, **dadurch gekennzeichnet, dass** die Absaugleitung (17) in eine ringförmige Zone (43) im Gehäuse (39) mündet, die innen von einem Mantel (33) begrenzt ist, in welchem der Laserstrahl (51) geführt oder die Heizspitze angeordnet ist.

13. Stick- oder Nähmaschine (1) nach Anspruch 12, **dadurch gekennzeichnet, dass** das strömungsseitig vordere Ende des Mantels (33) in einem Abstand zur Öffnung (41) des Gehäuses (39) endet, derart, dass in den vom Mantel (33) umgebenen zentralen Bereich eingeleitete Spülluft die sich mit der durch die angesaugte Materialschicht (47) durchtretende und durch die Öffnung (41) angesaugte Luft durch die ringförmige Zone (43) vor der Öffnung (41) mit der abgesaugten Luft umlenkt und mit den Schmutzpartikeln und/oder gasförmigen Verunreinigungen in die Absaugleitung (17) gelangt.

14. Stick- oder Nähmaschine (1) nach Anspruch 7, **dadurch gekennzeichnet, dass** die Öffnung (41) in einer sich zur Öffnung (41) seitlich erstreckenden Führungs- oder Auflageplatte (53) angeordnet ist, deren seitliche Kanten in einem spitzen Winkel zur Oberfläche der Führungs- oder Auflageplatte 53 verlaufend ausgebildet sind.

15. Stick- oder Nähmaschine (1) nach Anspruch 10 oder einem der Ansprüche 11-13 soweit sie sich auf den Anspruch 10 beziehen, **dadurch gekennzeichnet, dass** als Laser ein Diodenlaser (27) einsetzbar ist, wobei der Diodenlaser (27) insbesondere eine Wellenlänge im Bereich von 435 nm bis einschliesslich 455 nm aufweist.

## Claims

1. A method in order to apply flat material pieces of desired shape to an embroidery base (45) by means of an embroidery or sewing machine (1), wherein at least one material layer (47) is arranged above the embroidery base (45), wherein, controlled by a program of the embroidery machine or sewing machine (1), a relative movement is produced between a cutting device (9) arranged on the embroidery or sewing machine (1), containing a cutting member (15), and the material layer (47), in order to cut out a material piece of the material layer (47) with the cutting member (15),
- wherein the cutting member (15) is advanced together with a housing (39), into which the cutting member (15) is inserted, in the direction of the material layer (47) and/or the material layer (47) and the embroidery base (45) to the housing (39) until the front side of the housing (39) touches the material layer (47),
- wherein the material layer (47) lies in contact, smoothed, with the front side of the housing (39), which forms a reference plane E,
- wherein the cutting member (15) penetrates the material layer (47) though an opening (41) configured in the front side of the housing (39) in the housing (39), and
- wherein the material layer (47) is cut by the cutting member (15), wherein during the cutting operation the material layer (47) is sucked in by a negative pressure present in the internal space of the housing (39) at the opening (41), **characterized in that** the material layer (47), during sucking in at the opening (41), is raised from the embroidery base (45) and the cutting member (15) does not touch and does not damage the embroidery base (45) during cutting of the material layer (47).

2. The method according to Claim 1, **characterized in that** the material layer (47) is positioned on a bead (40) wholly or partially surrounding the opening (41).

3. The method according to any one of Claims 1 or 2, **characterized in that** a lower pressure compared with the surroundings is built up in the region of the opening (41) on the housing (39) by suctioning off of air in the internal space of the housing (39), by means of which lower pressure the material layer (47) lying in contact with the opening (41) is sucked in by the air streaming into the housing (39) at the opening (41) of the housing (39).

4. The method according to any one of Claims 1 to 3, **characterized in that** a laser beam (51) is routed through the housing (39) as a cutting member (15) in order to cut the material layer (47), the focal point of which laser beam is focused in the region of the opening (41) which forms a reference plane E, and cuts the material layer (47), wherein the cutting operation can comprise at least one of the cutting methods of melting, burning and vaporization.

5. The method according to any one of Claims 1 to 3, **characterized in that** the cutting device (9) comprises a heatable point which is arranged in the housing (39), wherein the heatable point penetrates a reference plane E above the opening (41) by the amount of the thickness of the material layer (47) and cuts the material layer (47).

6. The method according to Claim 5, **characterized in that** the material layer (47) contains a plastic fiber and/or the material layer (47) is meltable or not meltable.

7. An embroidery or sewing machine (1), containing a cutting device (9) for an embroidery base (45) having a material layer (47), wherein the material layer (47) rests on the embroidery base (45), wherein the embroidery machine or sewing machine (1) comprises a control program for controlling the cutting device (9), such that flat material pieces of the material layer (47) is cuttable by the cutting device (9), wherein the cutting device (9) comprises a cutting member (15),
wherein the cutting device (9) is movable between a resting position and a working position on the material layer (47) above the embroidery base (45), and/or the material layer (47) is configured such that it is able to be brought closer to the cutting device (9),
wherein the cutting member (15) is arranged in a housing (39) of the cutting device (9) and the housing (39) has an opening (41), wherein the opening (41) is able to be brought into contact with the material layer (47) in the working position in such a way that the cutting member (15) is able to penetrate the material layer (47) in the region of the opening (41),
wherein a negative pressure is producable in the internal space of the housing (39), which is suitable for sucking in the material layer (47) at the opening (41), **characterized in that** the cutting device (9) is designed such that the material layer (47) is raised from the embroidery base (45) during suctioning in at the opening (41) and the cutting member (15) is arranged such that it does not touch and does not damage the embroidery base (45) during cutting of the material layer (47) .

8. The embroidery or sewing machine (1) according to Claim 7, **characterized in that** the opening (41) is wholly or partially enclosed by a bead (40).

9. The embroidery or sewing machine (1) according to any one of Claims 7 or 8, **characterized in that** a suctioning-off line (17) opens out into the housing (39), wherein air is able to be sucked in through the opening (41) such that the material layer (47) which is located in the working position in front of the opening (41) lies in contact with the opening (41).

10. The embroidery or sewing machine (1) according to any one of Claims 7 to 9, **characterized in that** a heating point is arranged as the cutting member (15) in the housing (39), by means of which the material layer (47) is severable at the opening (41), or a laser module (25) for producing a laser beam (51) is arranged as the cutting member (15) in the housing (39), in the focal point (49) of which laser beam the material layer (47) is cuttable at the opening (41).

11. The embroidery or sewing machine (1) according to any one of Claims 9 or 10, **characterized in that** a blowing airline (11) opens out into the housing (39) in order to form an air flow, with which particles of dirt and/or gaseous impurities able to be led away from the region of the cutting member (15) and are dischargable by means of the suctioning-off line (17).

12. The embroidery or sewing machine (1) according to Claim 11, **characterized in that** the suctioning-off line (17) opens out into an annular zone (43) in the housing (39), which is delimited internally by a casing (33) in which the laser beam (51) is guided or the heating point is arranged.

13. The embroidery or sewing machine (1) according to Claim 12, **characterized in that** the front end of the casing (33) on the flow side ends at a distance from the opening (41) of the housing (39) in such a way that flushing air introduced into the central region surrounded by the casing (33) deflects the air entering through the sucked-in material layer (47) and sucked in through the opening (41) through the annular zone (43) in front of the opening (41) with the suctioned-off air and arrives with the particles of dirt and/or gaseous impurities in the suctioning-off line (17).

14. The embroidery or sewing machine (1) according to Claim 7, **characterized in that** the opening (41) is arranged in a guide or support plate (53) extending laterally to the opening (41), the lateral edges of which are configured running at an acute angle to the surface of the guide or support plate 53.

15. The embroidery or sewing machine (1) according to Claim 10 or any one of Claims 11-13 inasmuch as they relate to Claim 10, **characterized in that** a diode laser (27) is utilizable as a laser, wherein the diode laser (27) has in particular a wavelength in the range of 435 nm up to and including 455 nm.

## Revendications

1. Procédé pour appliquer au moyen d'une machine à broder ou d'une machine à coudre (1) des pièces de matière en nappe de forme souhaitée sur un fond à broder (45), au moins une couche de matière (47) étant disposée sur le fond à broder (45), un mouvement relatif étant généré, commandant par un programme de la machine à broder ou de la machine à coudre (1), entre un dispositif de coupe (9) disposé sur la machine à broder ou la machine à coudre (1), comprenant un organe de coupe (15) et la couche de matière (47), afin de découper une pièce de matière de la couche de matière (47) avec l'organe de coupe (15),
- l'organe de coupe (15) étant avancé conjointement à un boîtier (39), dans lequel l'organe de coupe (15) est placé, dans la direction de la couche de matière (47), et/ou la couche de matière (47) et le fond à broder (45) étant avancé vers le boîtier (39) jusqu'à ce que le côté frontal du boîtier (39) touche la couche de matière (47),
- la couche de matière (47) étant plaquée de façon lissée contre le côté frontal du boîtier (39), lequel forme un plan de référence E,
- l'organe de coupe (15) pénétrant dans la couche de matière (47) par une ouverture (41) formée dans le côté frontal du boîtier (39), dans le boîtier (39), et
- la couche de matière (47) étant coupée par l'organe de coupe (15), la couche de matière (47) étant aspirée contre l'ouverture (41) par une sous-pression appliquée dans l'espace intérieur du boîtier (39), **caractérisé en ce que** la couche de matière (47) est soulevée du fond à broder (45) lors de l'aspiration au niveau de l'ouverture (41) et **caractérisé en ce que** l'organe de coupe (15) ne touche pas et n'endommage pas le fond à broder (45) lors de la découpe de la couche de matière (47).

2. Procédé selon la revendication 1, **caractérisé en ce que** la couche de matière (47) est positionnée au niveau d'un bourrelet (40) entourant totalement ou partiellement l'ouverture (41).

3. Procédé selon l'une des revendications 1 ou 2, **caractérisé en ce qu'**une pression inférieure à la pression ambiante est appliquée dans la zone de l'ouverture (41) au niveau du boîtier (39) par aspiration d'air dans l'espace intérieur du boîtier (39), pression par laquelle la couche de matière (47) plaquée contre l'ouverture (41) est aspirée contre l'ouverture (41) du boîtier (39) par l'air entrant dans le boîtier (39).

4. Procédé selon l'une des revendications 1 à 3, **caractérisé en ce qu'**un faisceau laser (51) est dirigé à travers le boîtier (39) comme organe de coupe (15) pour la découpe de la couche de matière (47), faisceau laser dont le foyer est concentré dans la zone de l'ouverture (41), laquelle forme un plan de référence E, et découpe la couche de matière (47), le processus de coupe pouvant comprendre au moins un procédé de coupe parmi la fusion, la combustion, l'évaporation.

5. Procédé selon l'une des revendications 1 à 3, **caractérisé en ce que** le dispositif de coupe (9) comprend une pointe chauffable qui est disposée dans le boîtier (39), la pointe chauffable pénétrant un plan de référence E par l'ouverture (41) sur la distance de l'épaisseur de la couche de matière (47) et coupant la couche de matière (47).

6. Procédé selon la revendication 5, **caractérisé en ce que** la couche de matière (47) comprend une fibre synthétique et/ou **en ce que** la couche de matière (47) est fusible ou non fusible.

7. Machine à broder ou à coudre (1) comprenant un dispositif de coupe (9) pour un fond à broder (45) avec une couche de matière (47), la couche de matière (47) reposant sur le fond à broder (45), la machine à broder ou la machine à coudre (1) comprenant un programme de commande pour la commande du dispositif de coupe (9), de telle sorte que des pièces de matière (47) en nappe sont découpable par le dispositif de coupe (9), le dispositif de coupe (9) comprenant un organe de coupe (15),
le dispositif de coupe (9) étant mobile entre une position de repos et une position de travail sur la couche de matière (47) au-dessus du fond à broder (45) et/ou la couche de matière (47) étant formée pour pouvoir être amenée au dispositif de coupe (9),
l'organe de coupe (15) étant disposé dans un boîtier (39) du dispositif de coupe (9) et le boîtier (39) présentant une ouverture (41), l'ouverture (41) pouvant, dans la position de travail, être amenée en contact avec la couche de matière (47) de telle sorte que l'organe de coupe (15) peut pénétrer dans la zone de l'ouverture (41) dans la couche de matière (47), une sous-pression pouvant être générée dans l'espace intérieur du boîtier (39), laquelle est adaptée pour aspirer la couche de matière (47) contre l'ouverture (41), **caractérisée en ce que** le dispositif de coupe (9) est réalisé de telle sorte que la couche de matière (47) est soulevée du fond à broder (45) lors de l'aspiration contre l'ouverture (41) et **en ce que** l'organe de coupe (15) est disposé de telle sorte qu'il ne touche pas et n'endommage pas le fond à broder (45) lors de la découpe de la couche de matière (47).

8. Machine à broder ou à coudre (1) selon la revendication 7, **caractérisée en ce que** l'ouverture (41) est entourée totalement ou partiellement par un bourrelet (40).

9. Machine à broder ou à coudre (1) selon l'une des revendications 7 ou 8, **caractérisée en ce qu'**une conduite d'aspiration (17) débouche dans le boîtier (39), de l'air pouvant être aspiré par l'ouverture (41) de telle sorte que la couche de matière (47) se trouvant en position de travail devant l'ouverture (41) est plaquée contre l'ouverture (41).

10. Machine à broder ou à coudre (1) selon l'une des revendications 7 à 9, **caractérisée en ce qu'**une pointe chauffante est disposée dans le boîtier (39) comme organe de coupe (15), au moyen de laquelle la couche de matière (47) est sectionnable au niveau de l'ouverture (41), ou **en ce qu'**un module laser est disposé dans le boîtier (39) comme organe de coupe (15) pour la génération d'un faisceau laser (51) dans le foyer (49) duquel la couche de matière (47) est découpable au niveau de l'ouverture (41).

11. Machine à broder ou à coudre (1) selon l'une des revendications 9 ou 10, **caractérisée en ce qu'**une conduite d'air de soufflage (11) débouche dans le boîtier (39) afin de former un flux d'air avec lequel des particules de saleté et/ou des impuretés gazeuses peuvent être éloignées de la zone de l'organe de coupe (15) et évacuées au moyen de la conduite d'aspiration (17).

12. Machine à broder ou à coudre (1) selon la revendication 11, **caractérisée en ce que** la conduite d'aspiration (17) débouche dans une zone annulaire (43) dans le boîtier (39), laquelle est délimitée à l'intérieur par une enveloppe (33) dans laquelle le faisceau laser (51) est mené ou la pointe chauffante est disposée.

13. Machine à broder ou à coudre (1) selon la revendication 12, **caractérisée en ce que** l'extrémité avant de l'enveloppe (33) du côté du flux s'arrête à une distance de l'ouverture (41) du boîtier (39) de telle sorte que de l'air de balayage amené dans la zone centrale entourée par l'enveloppe (33) se dévie avec l'air traversant la couche de matière (47) aspirée et l'air aspiré par l'ouverture (41) par la zone annulaire (43) devant l'ouverture (41), avec l'air aspiré, et pénètre dans la conduite d'aspiration (17) avec les particules de saleté et/ou les impuretés gazeuses.

14. Machine à broder ou à coudre (1) selon la revendication 7, **caractérisée en ce que** l'ouverture (41) est disposée dans une plaque de guidage ou de support (53) s'étendant latéralement par rapport à l'ouverture (41), plaque dont les bords latéraux s'étendent en formant un angle aigu vers la surface de la plaque de guidage ou de support 53.

15. Machine à broder ou à coudre (1) selon la revendication 10 ou selon l'une des revendications 11-13, pour autant qu'elles se rapportent à la revendication 10, **caractérisée en ce qu'**un laser à diode (27) est utilisable comme laser, le laser à diode (27) présentant en particulier une longueur d'onde dans la plage de 435 nm à 455 nm compris.
